Europäisches Patentamt

(19) European Patent Office          (11) Publication number:  **0 223 506**

Office européen des brevets                              **B1**

(12)          **EUROPEAN PATENT SPECIFICATION**

(45) Date of publication of the patent specification:      (51) Int. Cl.⁴: **C03B 9/34**
15.03.89

(21) Application number: **86308628.6**

(22) Date of filing: **05.11.86**

(54) Forming parisons in the manufacture of glass containers.

(30) Priority: **08.11.85 GB 8527644**

(43) Date of publication of application:
**27.05.87 Bulletin 87/22**

(45) Publication of the grant of the patent:
**15.03.89 Bulletin 89/11**

(84) Designated Contracting States:
**DE FR GB IT**

(56) References cited:
**DE-C- 114 291**
**GB-A- 2 093 016**
**US-A- 1 404 206**
**US-A- 1 853 861**
**US-A- 2 075 771**
**US-A- 2 205 382**
**US-A- 3 171 732**

(73) Proprietor: **EMHART INDUSTRIES, INC., 426 Colt Highway, Farmington Connecticut 06032(US)**

(72) Inventor: **Foster, Thomas Vincent, 10 Meaburn Close, Cantley Doncaster Yorkshire(GB)**

(74) Representative: **Drury, Peter Lawrence et al, Emhart Patents Department Lyn House 39 The Parade, Oadby, Leicester LE2 5BB(GB)**

## Description

This invention is concerned with a method of forming parisons in the manufacture of glass containers and with a baffle for use in such a method.

In the manufacture of glass containers, a gob of molten glass is formed into a parison and then the parison is transferred to a mould in which it is blown into the shape of the required container. The parison is formed by introducing a gob of molten glass into a cavity of a mould through an upwardly-opening loading opening of the mould, positioning a baffle on the mould so that the baffle closes the loading opening, and applying pressure to the glass to cause it to be pressed into contact with moulding surfaces of the mould cavity and the baffle to thereby shape the parison. The pressure may be applied to the glass either by moving a plunger into the mould cavity so that the plunger forces the glass against the moulding surfaces or by blowing air into a cavity in the glass so that the glass is caused to expand. Where the parison is blown, the gob is first forced down into contact with a small plunger by applying air under pressure to the glass, the plunger is then withdrawn from the glass leaving a space therein, and the blowing air is introduced into the space vacated by the plunger. The prior art portion of claims 1 and 2 is based on this prior art, known e.g. from US-A 3 171 732.

After the gob has been introduced into the mould cavity, the glass which is to form the outer surface of the parison forms the outer surface of the gob. Lower and side portions of the outer surface of the gob are in contact with the mould throughout the parison forming process so that they are continually losing heat to the mould. However, the upper portion of the surface of the gob is initially not in contact with the mould and only comes into contact with the baffle at the end of the parison forming process. Thus, this upper portion does not lose as much heat as do the remaining portions of the surface of the gob. Where the parison is blown, this results in an unequal distribution of glass in the wall of the parison, the phenomenon being known as "settle wave". This unequal glass distribution causes the production of inferior containers. The phenomenon does not occur, where the parison is pressed by a plunger, as the wall thickness is controlled.

It is an object of the present invention to provide a method of alleviating the phenomenon of "settle wave" and a baffle for use in such a method.

The invention provides a method of forming parisons in the manufacture of glass containers, the method comprising introducing a gob of molten glass into a cavity of a mould through an upwardly-opening loading opening of the mould, positioning a baffle on the mould so that the baffle closes the loading opening, and applying pressure to the glass by blowing air into a cavity therein to cause it to be pressed into contact with moulding surfaces of the mould cavity and the baffle to thereby shape the parison, characterised in that the baffle also comprises a heat-absorbing member which is introduced into the mould cavity and engages an upper portion of the gob when the baffle is in its operative position, said heat absorbing member being arranged to move with the glass as the glass is pressed as aforesaid to a limit position in which the heat-absorbing member forms with a part of its surface a part of the moulding surface of the baffle.

In a method according to the last preceding paragraph, the heat-absorbing member absorbs heat from the upper surface of the gob so that this upper surface portion experiences similar conditions to the remainder of the surface of the gob during the parison formation process. In this way, the unequal distribution of glass is reduced.

The invention also provides a baffle for use in forming parisons in the manufacture of glass containers for closing an upwardly-opening loading opening of a mould cavity after a gob of molten glass has been introduced into the mould cavity, the baffle comprising a body portion arranged to be mounted on moving means for moving the baffle between an operative position thereof in which it closes said loading opening and an out-of-the-way position thereof, and a heat-absorbing member mounted on the body portion so that, when the baffle is in its operative position, the member projects through the loading opening into contact with the molten glass, the member being retractable into a recess in the body portion when pressure is applied to the glass to a limit position in which the heat-absorbing member forms with a part of its surface a part of the moulding surface of the baffle.

By the use of a baffle according to the last preceding paragraph, it is ensured that the heat-absorbing member is brought into contact with the glass as soon as possible after the loading of the gob into the mould cavity. The heat absorbing member can then act to absorb heat from the upper surface of the glass for the maximum length of the parison-forming process and thereby reduce the phenomenon of "settle wave".

The heat-absorbing member may be made of the same material as the mould, e.g. cast iron or other metal, so that the upper surface of the glass experiences similar conditions to the side and lower surfaces of the glass.

In order to provide for the introduction of air under pressure into the mould cavity to force the glass downwardly into contact with the plunger used for creating a cavity in the glass into which air is blown, the heat-absorbing member may define air passages opening through side portions of the member so that, when the member projects into the cavity, air can enter the cavity through the passages, the passages being arranged to be closed as the member retracts into the recess.

In order to counter balance the weight of the heat-absorbing member, the heat-absorbing member may be carried on a spring mounted on the body portion of the baffle so that the action of the spring tends to counteract the weight of the heat-absorbing member.

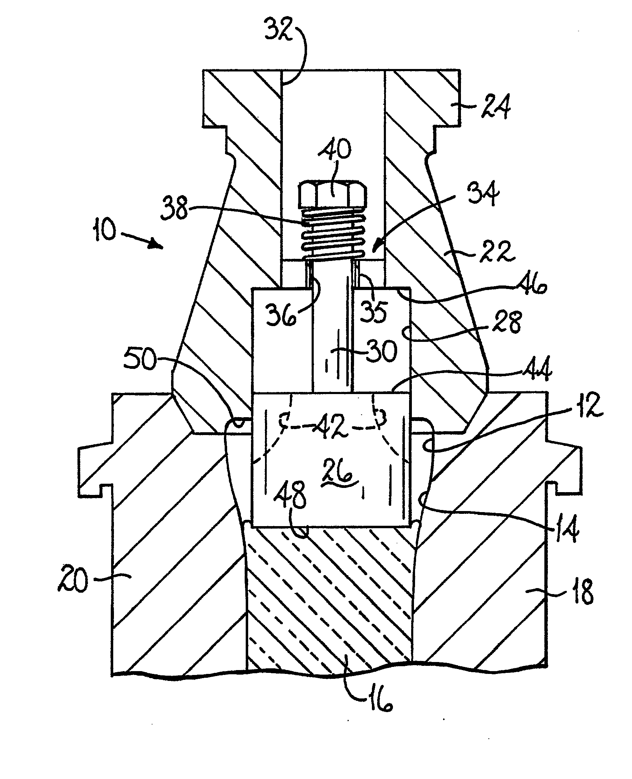

There now follows a detailed description, to be read with reference to the accompanying drawing, of a method of forming parisons and of a baffle for use in such a method which are illustrative of the invention. It is to be understood that the illustrative method and the illustrative baffle have been selected for description by way of example.

The drawing is a cross-sectional view taken vertically through the illustrative baffle showing it in position on a mould.

The illustrative baffle 10 is for use in forming parisons in the manufacture of glass containers for closing an upwardly-opening loading opening 12 of a mould cavity 14 after a gob of molten glass 16 has been introduced into the mould cavity 14. The mould cavity 14 is defined by side portions 18 and 20 which engage one another and define the cavity 14. The baffle 10 comprises a body portion 22 arranged to be mounted on moving means (not shown) for moving the baffle 10 between an operative position thereof (shown in the drawing) in which the baffle closes the loading opening 12 and an out-of-the-way position of the baffle reached by moving the baffle vertically away from the mould and also turning it out of alignment therewith. The body portion 22 has a flange 24 by which the baffle 10 is secured to the moving means.

The baffle 10 also comprises a heat absorbing member 26 in the form of a cylindrical plug of cast iron which is mounted on the body portion 22 so that, when the baffle 10 is in its operative position, the member 26 projects through the loading opening 12 into contact with the molten glass 16 (this condition is shown in the drawing). The member 26 is retractable into a cylindrical recess 28 in the body portion 22 when pressure is applied to the glass.

The member 26 is mounted on the portion 22 by means of a bolt 30 which extends upwardly from the member 26 through the recess 28 and into a passage 32 in the body portion 22. The passage 32 is separated from the recess 28 by a flange 34 of the body portion 22 which has a central hole 36 through which the bolt 30 passes. A spring 38 acts between the flange 34 and a head 40 of the bolt 30 which is in the passage 32. Thus, the heat-absorbing member 26 is carried on the spring 38 mounted on the body portion 22 of the baffle 10. Holes 35 in the flange 34 allow air to pass from the passage 32 into the recess 28.

The heat-absorbing member 26 defines air passages 42 opening through side portions of the member 26 so that, when the member 26 projects into the cavity 14, air can enter the cavity through the passages 42. The passages 42 are arranged to be closed as the member retracts into the recess 28. The passages 42 are formed by grooves in the member 26 which open at an upper end of the member 26 and communicate with the interior of the recess 28 and open as slots in the sides of the member 26. Air under pressure introduced into the passage 32 can pass through the holes 35 and the recess 28 and enter the cavity 14 through the passages 42.

In the illustrative method, parisons are formed by introducing the gob 16 of molten glass into the cavity 14 of a mould through the upwardly-opening loading opening 12 of the mould, positioning the baffle 10 on the mould so that the baffle closes the loading opening 12, applying air under pressure to the passage 32 so that the air enters the cavity 14 through the passages 42 and forces the glass 16 downwardly in the mould into contact with a plunger (not shown), withdrawing the plunger from the glass 16 to leave a cavity in the glass, and applying pressure to the glass to cause it to be pressed into contact with moulding surfaces of the mould cavity 14 and the baffle 10 to thereby shape the parison by introducing air under pressure into the cavity vacated by the plunger so that the glass 16 is blown. In the illustrative method, when the baffle is positioned on the mould, the heat-absorbing member 26 is introduced into the mould cavity 14 and engages an upper portion of the gob 16. The heat-absorbing member 26 acts to absorb heat from the upper surface of the glass 16. As the parison is blown in the illustrative method, the heat-absorbing member 26 retracts into the recess 28 until the upper surface 44 of the member 26 engages an upper surface 46 of the recess 28 at which point the lower surface 48 of the member 26 is flush with a lower surface 50 of the portion 10. Thus, at the end of the parison blowing process, the glass is pressed against a continuous surface provided by the baffle 10 and the side portions 18 and 20.

It is found that the illustrative method provides parisons with a more equal distribution of glass than is achieved by conventional methods. This distribution is improved if the member 26 is formed of the same material as the side portions 18 and 20.

**Claims**

1. A method of forming parisons in the manufacture of glass containers, the method comprising introducing a gob (16) of molten glass into a cavity (14) of a mould (18, 20) through an upwardly-opening loading opening (12) of the mould, positioning a baffle (10) on the mould so that the baffle closes the loading opening, and applying pressure to the glass by blowing air into a cavity therein to cause it to be pressed into contact with moulding surfaces of the mould cavity and the baffle to thereby shape the parison, characterised in that the baffle also comprises a heat-absorbing member (26) which is introduced into the mould cavity and engages an upper portion of the gob when the baffle is in its operative position, said heat-absorbing member being arranged to move with the glass as the glass is pressed as aforesaid to a limit position in which the heat-absorbing member forms with a part of its surface (48) a part of the moulding surface of the baffle.

2. A baffle (10) for use in forming parisons in the manufacture of glass containers for closing an upwardly-opening loading opening (12) of a mould cavity (18, 20) after a gob (16) of molten glass has been introduced into the mould cavity, the baffle comprising a body portion (22) arranged to be mounted on moving means for moving the baffle between an operative position thereof in which it closes said loading opening and an out-of-the-way position thereof, characterised in that the baffle also comprises a heat-absorbing member (26) mounted on the body portion so that, when the baffle is in its operative position, the member projects through the loading opening (12) into contact with the molten glass, the member being retractable into a recess (28) in the body portion (22) when pressure is applied to the glass to a limit position in which the heat-absorbing member forms with a part of its surface (48) a part of the moulding surface of the baffle.

3. A baffle according to claim 2, characterised in that the heat-absorbing member (26) is made of the same material as the mould.

4. A baffle according to either one of claims 2 and 3, characterised in that the heat-absorbing member (26) defines air passages (42) opening through side portions of the member so that, when the member projects into the cavity, air can enter the cavity through the passages, the passages being arranged to be closed as the member retracts into the recess (28).

5. A baffle according to any one of claims 2 to 4, characterised in that the heat-absorbing member (26) is carried on a spring (38) mounted on the body portion (22) of the baffle (10).

**Patentansprüche**

1. Verfahren zur Formung von Vorformen während der Herstellung von Glasbehältern, wobei ein Batzen (16) aus geschmolzenem Glas in einen Hohlraum (14) einer Form (18, 20) durch eine oben offene Beschickungsöffnung (12) der Form eingebracht wird, wobei ein Formaufsatz (10) derart auf die Form gesetzt wird, daß der Formaufsatz die Beschickungsöffnung verschließt, wobei Druck auf das Glas durch Einblasen von Luft in den hierin gebildeten Hohlraum ausgeübt wird, um es in Kontakt mit den formgebenden Oberflächen des Formhohlraums und des Formaufsatzes zu pressen und dadurch die Gestalt der Vorform zu bilden, dadurch gekennzeichnet, daß der Formaufsatz ebenfalls einen wärmeabsorbierenden Körper (26) umfaßt, der in den Formhohlraum eingefahren wird und sich an einen oberen Abschnitt des Batzens anlegt, wenn der Formaufsatz in seiner Arbeitsstellung ist, und daß der wärmeabsorbierende Körper so angeordnet ist, daß er sich mit dem Glas, wenn es gepreßt wird, bis zu einer Endlage bewegt, in der der wärmeabsorbierende Körper mit einem Teil seiner Oberfläche (48) einen Teil der formgebenden Oberfläche des Formaufsatzes bildet.

2. Formaufsatz (10) zur Anwendung für die Formung von Vorformen während der Herstellung von Glasbehältern zum Verschließen einer oben offenen Beschickungsöffnung (12) eines Formhohlraumes (18, 20), nachdem ein Batzen (16) aus geschmolzenem Glas in den Formhohlraum eingebracht worden ist, wobei der Formaufsatz einen Körperabschnitt (22) umfaßt, der auf einer Bewegungseinrichtung angeordnet wird, mit der sich der Formaufsatz zwischen seiner Arbeitsstellung, in der er die erwähnte Beschickungsöffnung verschließt, und seiner Ruhestellung bewegt, dadurch gekennzeichnet, daß der Formaufsatz einen wärmeabsorbierenden Körper (26) umfaßt, der so auf dem Körperabschnitt angeordnet ist, daß der Körper, wenn der Formaufsatz in seiner Arbeitsstellung ist, sich durch die Beschickungsöffnung (12) bis zum Kontakt mit dem geschmolzenen Glas erstreckt, und daß der Körper in eine Ausnehmung (28) im Körperabschnitt (22), wenn Druck auf das Glas ausgeübt wird, bis zu einer Endstellung zurückziehbar ist, in welcher der wärmeabsorbierende Körper mit einem Teil seiner Oberfläche (48) einen Teil der formgebenden Oberfläche des Formaufsatzes bildet.

3. Formaufsatz nach Anspruch 2, dadurch gekennzeichnet, daß der wärmeabsorbierende Körper (26) aus demselben Werkstoff hergestellt ist wie die Form.

4. Formaufsatz nach einem der Ansprüche 2 und 3, dadurch gekennzeichnet, daß der wärmeabsorbierende Körper (26) Luftkanäle (42) definiert, die durch Seitenabschnitte des Körpers austreten, so daß Luft, wenn der Körper in den Hohlraum vorragt, durch die Kanäle in den Hohlraum eindringen kann, und daß die Kanäle so angeordnet sind, daß sie geschlossen werden, wenn der Körper in die Ausnehmung (28) zurückfährt.

5. Formaufsatz nach einem der Ansprüche 2 bis 4, dadurch gekennzeichnet, daß der wärmeabsorbierende Körper (26) auf einer Feder (38) geführt ist, die an dem Körperabschnitt (22) des Formaufsatzes (10) angebracht ist.

**Revendications**

1. Procédé de formation des ébauches au cours de la fabrication des récipients en verre, ce procédé consistant à introduire une paraison (16) de verre fondu dans une cavité (14) d'un moule (18, 20) à travers une ouverture de chargement (12) du moule, qui s'ouvre vers le haut, à positionner une plaque de fond (10) sur le moule de manière que la plaque de fond ferme l'ouverture de chargement du moule, et à appliquer une pression sur le verre en soufflant de l'air dans une cavité formée dans ce verre, pour le presser en contact avec les surfaces de moulage de la cavité du moule et de la plaque de fond, et mettre ainsi l'ébauche en forme, caractérisé en ce que la plaque de fond comprend aussi un élément absorbant la chaleur (26) qui est introduit dans la cavité du moule et entre en contact avec une portion supérieure de la paraison lorsque la plaque de fond est dans sa position active, cet élément absorbant la chaleur étant agencé pour se déplacer avec le verre lorsque le verre est pressé de la façon indiquée plus haut, jusqu'à une position limite dans laquelle l'élément absorbant la chaleur forme, par une partie de sa surface (48), une partie de la surface de moulage de la plaque de fond.

2. Plaque de fond (10) destinée à être utilisée, dans la formation des ébauches au cours de la fabrication des récipients en verre, pour fermer une ouverture de chargement (12) d'une cavité de moule (18, 20) ouverte vers le haut, après qu'une paraison (16) de verre fondu ait été introduite dans la cavité du moule, la plaque de fond comprenant un corps (22) agencé pour être monté sur des moyens de déplacement destinés à déplacer la plaque entre une position active, dans laquelle elle ferme l'ouverture de chargement, et une position écartée, et un élément absorbant la chaleur (26) monté sur le corps de telle manière que, lorsque la plaque de fond se trouve dans sa position active, cet élément fait saillie par l'ouverture de chargement (12) et entre en contact avec le verre fondu, l'élément pouvant être rétracté dans un évidement (28) du corps (22) lorsqu'une pression est appliquée sur le verre, jusqu'à une position limite dans laquelle l'élément absorbant la chaleur forme, par une partie de sa surface (48), une partie de la surface de moulage de la plaque de fond.

3. Plaque de fond selon la revendication 2, caractérisée en ce que l'élément absorbant la chaleur (26) est fait de la même matière que le moule.

4. Plaque de fond selon l'une ou l'autre des revendications 2 et 3, caractérisée en ce que l'élément absorbant la chaleur (26) définit des passages d'air (42) qui débouchent dans des portions latérales de cet élément, de sorte que, lorsque l'élément fait saillie dans la cavité, de l'air peut pénétrer dans la cavité en passant par les passages, les passages étant agencés pour se fermer lorsque l'élément se rétracte dans l'évidement (28).

5. Plaque de fond selon l'une des revendications 2 à 4, caractérisée en ce que l'élément absorbant la chaleur (26) est supporté par un ressort (38) monté sur le corps (22) de la plaque de fond (10).